(19) **Europäisches Patentamt / European Patent Office / Office européen des brevets**

(11) **EP 4 194 387 B1**

(12) **FASCICULE DE BREVET EUROPEEN**

(45) Date de publication et mention de la délivrance du brevet:
**05.03.2025 Bulletin 2025/10**

(21) Numéro de dépôt: **22212336.6**

(22) Date de dépôt: **08.12.2022**

(51) Classification Internationale des Brevets (IPC):
**B66C 23/16** (2006.01)    **B25J 9/04** (2006.01)

(52) Classification Coopérative des Brevets (CPC):
**B25J 9/042; B66C 23/027; B66C 23/04; B66C 23/16**

(54) **APPAREIL DE LEVAGE ARTICULÉ À EFFORTS PARASITES REDUITS**

GELENKHEBEGERÄT MIT REDUZIERTEN PARASITISCHEN KRÄFTEN

ARTICULATED LIFTING APPARATUS WITH REDUCED PARASITIC FORCES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.12.2021 FR 2113251**

(43) Date de publication de la demande:
**14.06.2023 Bulletin 2023/24**

(73) Titulaire: **Commissariat à l'Energie Atomique et aux Energies Alternatives
75015 Paris (FR)**

(72) Inventeur: **KFOURY, Fares
91191 Gif sur Yvette Cedex (FR)**

(74) Mandataire: **Cabinet Boettcher et al
5, rue de Vienne
75008 Paris (FR)**

(56) Documents cités:
**WO-A1-2013/113644    WO-A1-98/09908
CN-A- 109 264 597**

**Description**

DOMAINE DE L'INVENTION

La présente invention concerne le domaine du levage et plus particulièrement le domaine des bras de levage articulés.

ARRIERE PLAN DE L'INVENTION

Il est connu un appareil de levage comprenant une base sur laquelle est articulé un bras de levage et qui comprend un tambour motorisé relié à un câble en un premier point de guidage.

Le bras de levage comprend généralement un premier segment articulé sur un deuxième segment autour d'un premier axe à l'aide d'un premier pivot de manière à autoriser une rotation du deuxième segment relativement au premier segment autour du premier axe. L'extrémité distale du deuxième segment comprend généralement une première poulie de guidage du câble vers une charge à lever. Le bras comprend également une deuxième poulie de renvoi de câble classiquement montée à rotation autour du premier axe. Le dimensionnement des appareils de levage aboutit souvent à un diamètre de poulie supérieur à vingt-cinq fois le diamètre du câble.

Avec un tel appareil, lors du déplacement du deuxième segment relativement au premier, la tension du câble crée un couple résistant autour du premier axe qui s'oppose au mouvement relatif des segments. Un tel couple peut s'avérer difficile voire impossible à surmonter manuellement lors du levage de charges de masse importante. Accessoirement, on observe un déplacement de la charge provoqué par l'enroulement du câble autour de la poulie. Ce déplacement est d'autant plus important que l'enroulement du câble sur la poulie - et donc l'amplitude du déplacement du deuxième segment par rapport au premier- est important.

Ainsi, les appareils de levage à bras articulé de l'art antérieur ne permettent pas une manutention aisée de charges de masse importante sur toute la plage d'intervention du bras, ni une hauteur constante de la charge lors d'un déplacement relatif des segments du bras articulé, à moins d'une instrumentation du bras permettant de commander l'actionneur de levage pour maintenir la charge à hauteur constante. Il est alors nécessaire d'implanter un deuxième actionneur commandant l'articulation entre les segments et d'instrumenter le bras pour pouvoir piloter cet actionneur afin de conserver un fonctionnement collaboratif intuitif. Un tel actionneur et sa commande sont couteux et peuvent s'avérer dangereux car l'actionneur génère des efforts importants qui peuvent blesser un utilisateur et/ou son environnement. Enfin, il est nécessaire de commander le premier actionneur en fonction de la position relative des deux segments pour compenser les variations de hauteur de la charge. De tels équipements augmentent les prix de fabrication du bras, augmentent les coûts de maintenance et apportent une ergonomie insatisfaisante pour l'utilisateur.

Le document CN 109 264 597 A divulgue un appareil de levage selon le préambule de la revendication 1.

OBJET DE L'INVENTION

L'invention a notamment pour but d'améliorer l'ergonomie et/ou le cout d'un appareil de levage à bras articulé.

RESUME DE L'INVENTION

A cet effet, on prévoit un appareil de levage comprenant une base à laquelle est relié un bras de levage et un premier actionneur relié à un organe de transmission d'un effort de levage par un premier élément de guidage qui collabore avec l'organe de transmission en un premier point de guidage. Le bras de levage comprend un premier segment et un deuxième segment. Le premier segment comprend une première extrémité reliée à la base et une deuxième extrémité articulée sur une troisième extrémité du deuxième segment autour d'un premier axe à l'aide d'un premier pivot de manière à autoriser une rotation du deuxième segment relativement au premier segment autour du premier axe sur un premier secteur angulaire. Une quatrième extrémité du deuxième segment comprend un deuxième élément de guidage de l'organe de transmission qui collabore avec l'organe de transmission en un deuxième point de guidage. Selon l'invention, l'appareil comprend un troisième élément de guidage de l'organe de transmission qui collabore avec l'organe de transmission en un troisième point de guidage de l'organe de transmission et qui est agencé de manière à ce qu'une première droite passant par le deuxième point de guidage et le troisième point de guidage ou passant par le premier point de guidage et le troisième point de guidage soit sécante avec le premier axe pour une pluralité de positions relatives du premier segment et du deuxième segment, la pluralité de positions couvrant une portion du premier secteur angulaire au moins égale à la moitié du premier secteur angulaire.

Ainsi, la première droite étant sécante avec le premier axe O1, l'appareil élimine tout couple parasite pouvant s'opposer à la rotation du premier segment relativement au deuxième segment autour du premier axe. L'utilisateur n'a plus à fournir d'effort pour lutter contre un couple parasite. Une réalisation passive, c'est-à-dire sans actionnement autre que celui du premier actionneur, permet d'obtenir un appareil économique, fiable et performant.

On obtient aucune variation de la hauteur de la charge au cours de la rotation relative du premier et du deuxième élément lorsque le troisième élément de guidage est agencé de manière à ce qu'une longueur de l'organe de transmission comprise entre le premier point de guidage et le deuxième point de guidage soit constante pour la pluralité de positions relatives du premier segment et du deuxième segment. Ceci permet de ne pas avoir à instrumenter le premier actionneur et permet une commande du premier actionneur en position fixe.

On améliore l'ergonomie et le confort d'utilisation de l'appareil lorsque le premier secteur angulaire est sensiblement égal à cent quatre-vingt degrés et/ou la première portion est sensiblement égale à cent pour cent du premier secteur angulaire.

On obtient une conception simple de l'appareil lorsque le troisième élément de guidage comprend un premier renvoi de l'organe de transmission monté de manière mobile relativement au premier segment et au deuxième segment, l'appareil comprenant des premiers moyens de cheminement qui définissent une première trajectoire d'un premier centre du premier renvoi de l'organe de transmission.

L'appareil est particulièrement économique à réaliser lorsqu'au moins un premier galet est relié au premier renvoi de l'organe de transmission et les premiers moyens de cheminement comprennent au moins un premier chemin de roulement du premier galet.

Avantageusement, la première droite est fixe relativement au deuxième segment et/ou au premier segment pour au moins la pluralité de positions relatives du premier segment et du deuxième segment.

Lors d'un déplacement relatif entre le premier segment et le deuxième segment, l'organe de guidage conserve la même position relativement au premier segment (pour au moins son tronçon s'étendant le long du premier segment selon la première droite) et/ou l'organe de guidage conserve la même position relativement au deuxième segment (pour au moins son tronçon s'étendant le long du deuxième segment selon la première droite).

Le guidage est ainsi facilité.

Optionnellement, le premier point de guidage appartient au premier segment. Le premier point de guidage est donc fixe sur ledit segment.

Optionnellement, le deuxième point de guidage appartient au deuxième segment. Le deuxième point de guidage est donc fixe sur ledit segment.

Avantageusement, la première trajectoire est une trajectoire de type développante et/ou la première trajectoire dépend de la distance qui sépare le premier point de guidage et le premier axe et/ou la première trajectoire dépend également d'un premier rayon d'enroulement de l'organe de transmission autour du premier renvoi.

Selon un mode de réalisation préféré, la première trajectoire regroupe l'ensemble des points M dont les coordonnées dans un repère orthonormé centré sur le premier axe et dans lequel un axe des abscisses est confondu avec une deuxième droite reliant le premier point de guidage et le premier axe résolvent le système d'équations suivant :

[Math 1]

$$\begin{cases} L_1.(1-\cos\delta) + r_1.(\beta_2.\cos\delta - \sin\delta) - r_1.(\beta_1.\cos\theta + \sin\theta) = 0 \\ -L_1.\sin\delta + r_1.(\beta_2.\sin\delta + \cos\delta) - r_1.(\beta_1.\sin\theta - \cos\theta) = 0 \\ \beta_1 + \beta_2 + \theta - \delta - \pi = 0 \end{cases}$$

Avec

X, une abscisse du point M tel que X= r1*(β1*cosθ + sinθ) ;
Y, une ordonnée du point M tel que Y= r1*(β1*sinθ - cosθ) ;
θ un angle formé par le premier segment et le deuxième segment ;
r1 : le premier rayon d'enroulement de l'organe de transmission autour du premier renvoi.

Préférentiellement, la première droite passe par le deuxième point de guidage et le troisième point de guidage et les premiers moyens de cheminement sont solidaires du premier segment. Alternativement, la première droite passe passant par le premier point de guidage et le troisième point de guidage et les premiers moyens de cheminement sont solidaires du deuxième segment.

La fiabilité de l'appareil est améliorée lorsque les premiers moyens de cheminement comprennent une première butée et une deuxième butée de fin de course.

Avantageusement, les premiers moyens de cheminement comprennent un deuxième galet relié au premier renvoi de l'organe de transmission et les premiers moyens de cheminement comprennent un deuxième chemin de roulement du deuxième galet.

On augmente la plage d'intervention lorsque le troisième élément de guidage comprend un deuxième renvoi de l'organe de transmission monté de manière mobile relativement au premier segment et au deuxième segment, l'appareil de levage comprenant des deuxièmes moyens de cheminement qui définissent une deuxième trajectoire d'un deuxième centre du deuxième renvoi de l'organe de transmission.

Préférentiellement encore, au moins un troisième galet est relié au deuxième renvoi de câble et les deuxièmes moyens de cheminement comprennent au moins un troisième chemin de roulement du troisième galet et/ou le premier renvoi de l'organe de transmission et le deuxième renvoi de l'organe de transmission sont reliés de manière rigide l'un à l'autre.

La fiabilité de l'appareil est encore améliorée lorsque les deuxièmes moyens de cheminement comprennent une troisième butée et une quatrième butée de fin de course.

L'adaptabilité de l'appareil est encore améliorée lorsque le deuxième segment est configuré de manière à ce qu'une distance séparant le deuxième point de guidage et le premier axe soit modifiable. L'utilisation de l'appareil est facilitée lorsque l'appareil comprend un deuxième actionneur pour modifier la distance séparant le deuxième point de guidage et le premier axe.

Il est possible d'installer un mouflage ou de réaliser un actionnement de la charge selon deux sens lorsque le deuxième élément de guidage et/ou le troisième élément de guidage sont agencés pour collaborer avec une pluralité d'organes de transmission.

On obtient un appareil simple et robuste lorsque l'organe de transmission est un câble.

D'autres caractéristiques et avantages de l'invention ressortiront à la lecture de la description qui suit d'un mode de réalisation particulier et non limitatif de l'invention.

BREVE DESCRIPTION DES DESSINS

Il sera fait référence aux dessins annexés, parmi lesquels :

[Fig. 1] la figure 1 est une vue schématique en perspective d'un appareil de levage selon un premier mode de réalisation de l'invention ;
[Fig. 2] la figure 2 est une vue schématique partielle en perspective de l'appareil de levage de la figure 1 ;
[Fig. 3] la figure 3 est une vue schématique partielle en perspective de détail de l'appareil de levage de la figure 1 ;
[Fig. 4] la figure 4 est une représentation schématique plane partielle de l'appareil de levage de la figure 1 ;
[Fig. 5] la figure 5 est une vue schématique partielle en perspective de l'appareil de levage selon un deuxième mode de réalisation de l'invention;
[Fig. 6] la figure 6 est une vue de détail en perspective d'un troisième point de guidage selon un deuxième mode de réalisation de l'invention;
[Fig. 7] la figure 7 est une représentation schématique plane partielle de l'appareil de levage de la figure 5 ;
[Fig. 8] la figure 8 est une représentation schématique partielle en coupe de l'appareil de levage selon un troisième mode de réalisation de l'invention;
[Fig. 9] la figure 9 est une vue de détail en perspective d'un troisième point de guidage selon un quatrième mode de réalisation de l'invention.

DESCRIPTION DETAILLEE DE L'INVENTION

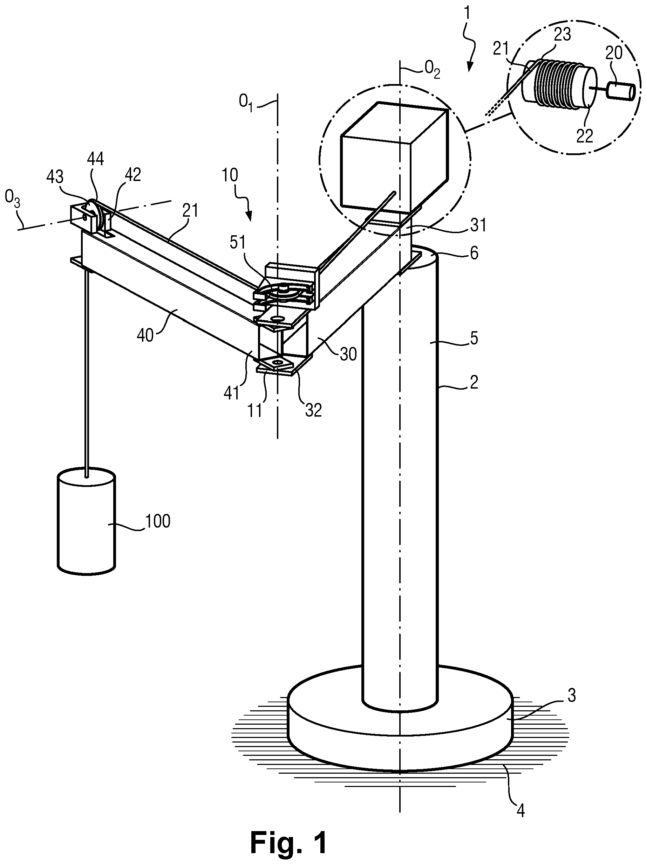

En référence à la figure 1, l'appareil de levage selon l'invention et généralement désigné 1, comprend une base 2 comprenant un pied 3 relié à un support 4, ici horizontal sur les représentations des figures 1 à 4.

La base 2 comprend un tube vertical 5 sur l'extrémité supérieure 6 duquel est articulé un bras de levage 10.

L'appareil 1 comprend un motoréducteur 20 relié à un câble 21 de levage par un tambour 22 qui collabore avec le câble 21 en un premier point de guidage 23 correspondant ici au point de tangence du câble 21 sur le tambour 22. Le bras 10 comprend un premier segment 30 et un deuxième segment 40 articulés l'un par rapport à l'autre autour d'un premier axe O1, ici un axe vertical. Le segment 30 comprend une première extrémité 31 articulée sur la base 2 autour d'un deuxième axe O2, ici sensiblement parallèle à l'axe O1, et une deuxième extrémité 32 articulée sur une troisième extrémité 41 du segment 40 autour de l'axe O1 à l'aide d'un premier pivot 11 comprenant, de manière connue, un arbre vertical non représenté à des fins de clarté. Le pivot 11 autorise une rotation du segment 40 relativement au segment 30 autour de l'axe O1 sur un premier secteur angulaire Sa1 ici égal à cent-soixante degrés, un angle de cent-quatre-vingt degrés correspondant à un alignement des segments 30 et 40.

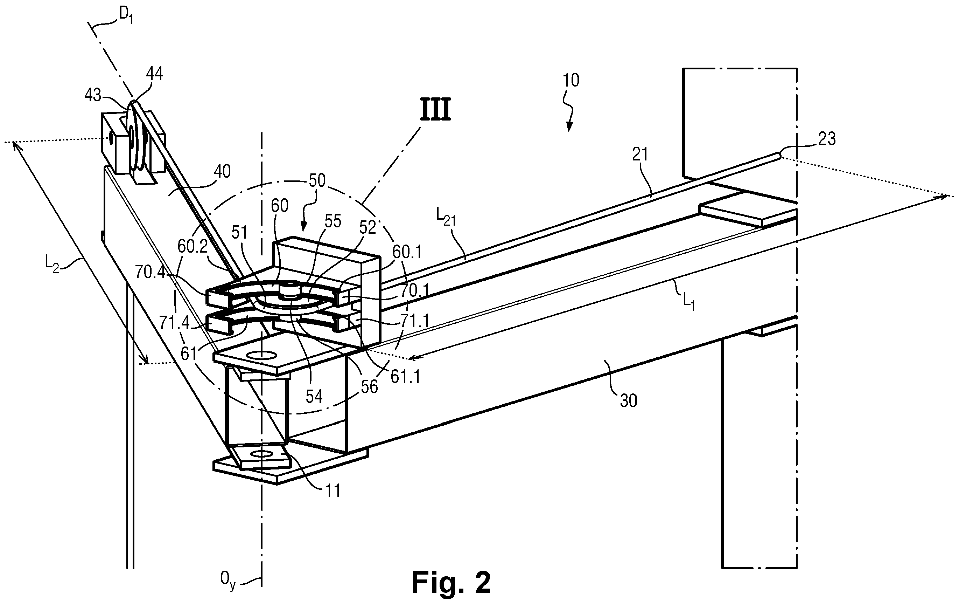

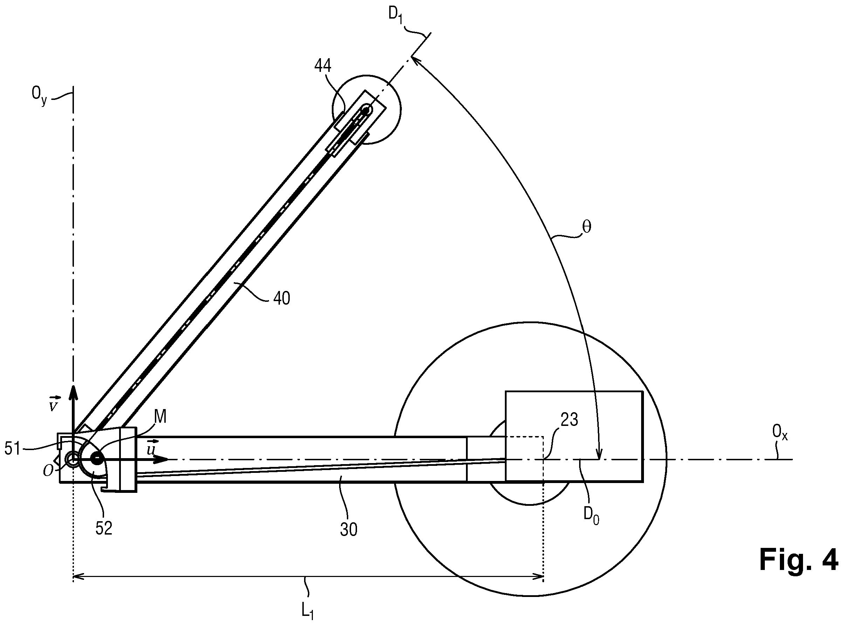

Le segment 40 comprend une quatrième extrémité 42 pourvue d'un réa 43 monté à rotation selon un troisième axe horizontal O3 et qui collabore avec le câble 21 en un deuxième point de guidage 44 -correspondant ici à l'un quelconque des points de tangence du câble 21 sur le réa 43. Le premier point de guidage 23 est séparé de l'axe O1 par une première distance L1 (voir figure 2 et4), correspondant sensiblement à une première longueur du premier segment 30. Le deuxième point de guidage 44 est séparé de l'axe O1 par une deuxième distance L2, correspondant sensiblement à une deuxième longueur du segment 40.

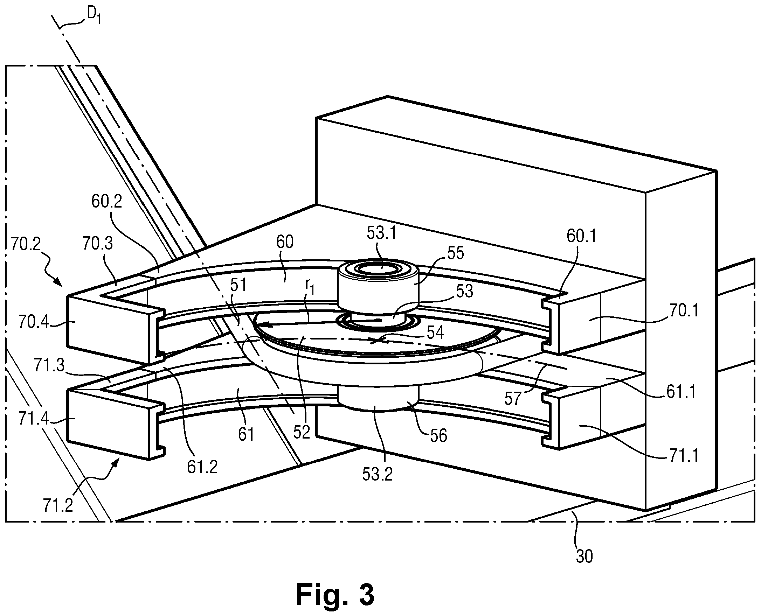

L'appareil 1 comprend un troisième élément de guidage 50 du câble 21 qui collabore avec le câble 21 en un troisième point de guidage 51 du câble 21. L'élément 50 comprend une première poulie 52 de premier rayon r1 montée à rotation autour d'un premier arbre 53 (visible figure 3) sensiblement vertical qui passe par un premier centre de rotation 54 de la poulie 52. L'extrémité supérieure 53.1 de l'arbre 53 est pourvue d'un premier galet 55 et l'extrémité inférieure 53.2 de l'arbre 53 est pourvue d'un deuxième galet 56. L'élément 50 comprend également un premier chemin de roulement 60 et un deuxième chemin de roulement 61 tous deux solidaires du segment 30. Les chemins 60 et 61 définissent respectivement la position des galets 55 et 56 et, incidemment, définissent une première trajectoire 57 du centre 54. La trajectoire 57 est ici une trajectoire de type développante. Le troisième point de guidage 51 correspond, ici, au point de tangence du câble 21 sur la poulie 52 qui est le plus proche du point 44.

La trajectoire 57 peut être définie comme regroupant l'ensemble des points M (X ;Y) dont les coordonnées dans un repère orthonormé $O(\vec{u}, \vec{v})$ lié au premier segment 30, centré sur l'axe 01 d'axes (Ox, Oy) et dans lequel l'axe des abscisses Ox est confondu avec une deuxième droite D0 reliant le premier point de guidage 23 et le premier axe O1 résolvent le système d'équations suivant :

[Math 1]

$$\begin{cases} L_1.(1 - \cos\delta) + r_1.(\beta_2.\cos\delta - \sin\delta) - r_1.(\beta_1.\cos\theta + \sin\theta) = 0 \\ -L_1.\sin\delta + r_1.(\beta_2.\sin\delta + \cos\delta) - r_1.(\beta_1.\sin\theta - \cos\theta) = 0 \\ \beta_1 + \beta_2 + \theta - \delta - \pi = 0 \end{cases}$$

Avec

X, une abscisse du point M tel que X= r1*(β1*cosθ + sinθ) ;
Y, une ordonnée du point M tel que Y= r1*(β1*sinθ - cosθ) ;
L1 une première distance séparant le premier point de guidage 23 du premier axe O1;
r1: le premier rayon d'enroulement de la première poulie 52;
θ un angle formé par le premier segment 30 et le deuxième segment 40 ;
les angles β1 et β2 représentent chacun une portion angulaire d'enroulement du câble sur la poulie 52, l'angle δ étant défini par la dernière équation du système d'équations ci-dessus.

Le système d'équation Math 1 comprend trois équations, trois inconnues β1, β2 et δ et un paramètre θ. Ainsi, le système d'équations Math 1 peut s'écrire sous la forme f(β1 ,θ)=0. Pour une valeur de l'angle θ comprise entre vingt et cent-quatre-vingt degrés, il est aisé de déterminer β1 et d'en déduire alors la position du point M pour cette valeur de θ. On procède alors par calculs successifs pour déterminer la trajectoire 57 pour une valeur de l'angle θ comprise entre 0 et cent-quatre-vingt degrés.

La première trajectoire 57 ainsi définie dépend, ici, de la première distance L1 qui sépare le premier point de guidage 23 et le premier axe O1. La première trajectoire 57 dépend également du premier rayon r1 d'enroulement du câble 21 autour de la première poulie 52.

Le système d'équation Math 1 représente une expression mathématique particulière, parmi d'autres possibles, d'un agencement de l'appareil 1 qui permet le respect des conditions suivantes lors de la variation de l'angle entre les deux segments:

a) une première droite D1 passant par le deuxième point de guidage 44 et le troisième point de guidage 51 est sécante avec le premier axe O1 ;
b) une longueur L21 du câble 21 comprise entre le premier point de guidage 23 et le deuxième point de guidage 44 est constante.

L'inventeur a constaté que la fonction définie de manière implicite sous la forme f(β1 ,θ)=0 est dérivable et continue pour des valeurs de l'angle θ comprises dans le premier secteur angulaire Sa1 non réduit à un point inclus ou égal à l'intervalle compris entre vingt et cent-quatre-vingt degrés, et qu'ainsi f(β1 ,θ)=0 fait correspondre une unique valeur de β1 pour chaque valeur de l'angle θ du premier secteur angulaireSa1.

Comme visible en figures 2 et 3, le premier chemin de roulement 60 comprend en son extrémité 60.1 une première butée supérieure 70.1 de fin de course et en son extrémité 60.2 une deuxième butée 70.2 supérieure de fin de course.

La deuxième butée supérieure 70.2 comprend un premier tronçon 70.3 rectiligne qui s'étend tangentiellement au chemin de roulement 60 pour relier un premier mur 70.4 qui s'étend sensiblement orthogonalement au premier tronçon 70.3.

Identiquement, le deuxième chemin de roulement 61 comprend en son extrémité 61.1 une première butée inférieure 71.1 de fin de course et en son extrémité 61.2 une deuxième butée inférieure 71.2 de fin de course. La deuxième butée inférieure 71.2 comprend un deuxième tronçon 71.3 rectiligne qui s'étend tangentiellement au chemin de roulement 61 pour relier un deuxième mur 71.4 qui s'étend sensiblement orthogonalement au deuxième tronçon 71.3.

En fonctionnement, lorsqu'un opérateur déplace le segment 40 relativement au segment 30 entre deux points du premier secteur angulaire Sa1, le centre 54 de la poulie 52 se déplace en suivant la trajectoire 57 grâce au chemins 60 et 61 avec lesquels collaborent les galets 55 et 56. Cet agencement garantit que la longueur L21 demeure constante et qu'ainsi une hauteur d'une charge 100 attelée au câble 21 ne varie pas pendant le déplacement relatif des segments 30 et 40 sur l'intégralité du secteur angulaire Sa1 lorsqu'une rotation du tambour 22 est bloquée. Le fait que la première droite D1 demeure sécante avec l'axe O1 élimine tout couple parasite pouvant s'opposer à la rotation du segment 30 relativement au segment 40 autour de l'axe O1.

Les éléments similaires ou analogues à ceux précédemment décrits porteront une référence numérique identique à ceux-ci dans la description qui suit d'un deuxième, troisième et quatrième modes de réalisation de l'invention.

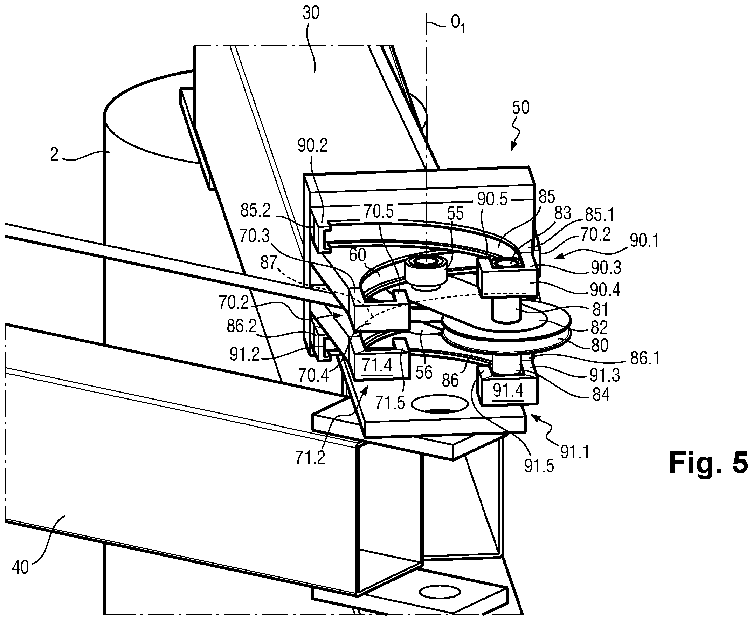

Selon un deuxième mode de réalisation représenté en figures 5 à 7, le pivot 11 autorise une rotation du segment 40 relativement au segment 30 autour de l'axe O1 sur un secteur angulaire Sa1 ici égal à trois-cent-vingt degrés. L'élément 50 comprend une deuxième poulie 80 de deuxième rayon r2 -ici égal à r1- montée à rotation autour d'un deuxième arbre 81 sensiblement vertical qui passe par un deuxième centre de rotation 82 de la poulie 80. L'extrémité supérieure 81.1 de l'arbre 81 est pourvue d'un troisième galet 83 et l'extrémité inférieure 81.2 de l'arbre 81 est pourvue d'un quatrième galet 84. L'élément 50 comprend également un troisième chemin de roulement 85 et un quatrième chemin de roulement 86 tous deux solidaires du segment 30. Les chemins 85 et 86 définissent respectivement la position des galets 83 et 84 et, incidemment, définissent une deuxième trajectoire 87 du centre 82. La trajectoire 87 est ici une trajectoire de type développante et peut être définie comme étant la courbe symétrique de la trajectoire 57 par rapport au plan défini par le premier axe O1 et le premier point de guidage 23.

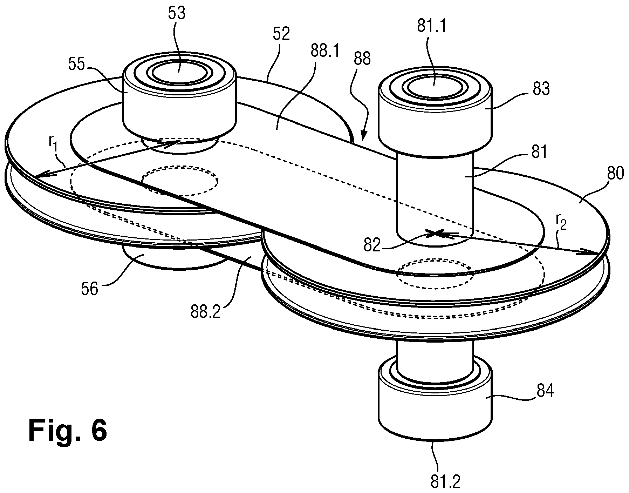

Comme visible en figure 6, un bras 88 relie l'arbre 53 et l'arbre 81. Le bras 88 comprend un flasque supérieur 88.1 et un flasque inférieur 88.2.

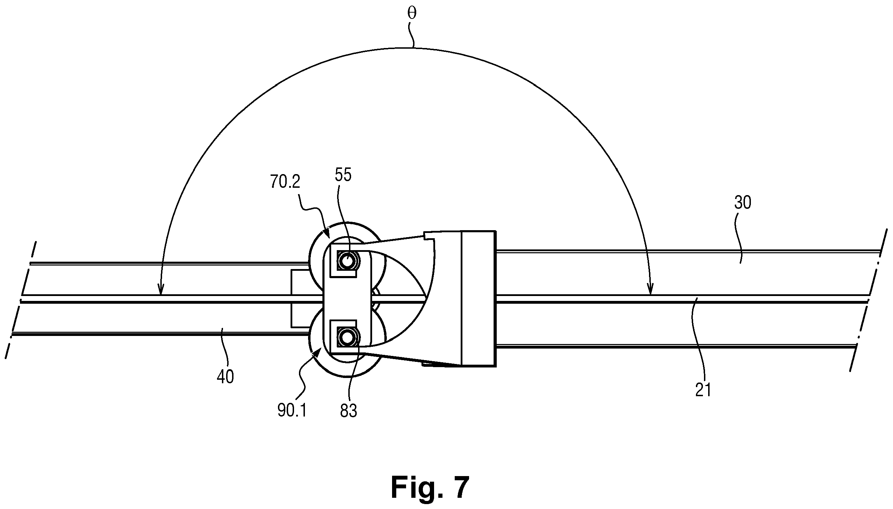

Comme visible en figures 5 et 7, le troisième chemin de roulement 85 comprend en ses extrémités 85.1 et 85.2 une troisième butée supérieure 90.1 de fin de course et une quatrième butée supérieure 90.2 de fin de course. Identiquement, le quatrième chemin de roulement 86 comprend en ses extrémités 86.1 et 86.2 une troisième butée inférieure 91.1 de fin de course et une quatrième butée inférieure 91.2 de fin de course.

La butée 70.2 comprend, dans ce deuxième mode de réalisation, une première paroi supérieure 70.5 qui s'étend sensiblement parallèlement au premier tronçon 70.3 pour former un logement de réception du galet 55 sensiblement en forme de C. De manière similaire, la butée 71.2 comprend une première paroi inférieure 71.5, qui s'étend sensiblement parallèlement au deuxième tronçon 71.3 pour former un logement de réception du galet 56 sensiblement en forme de C.

La troisième butée supérieure 90.1 comprend un troisième tronçon 90.3 rectiligne qui s'étend tangentiellement au chemin de roulement 85 pour relier un troisième mur 90.4 qui s'étend sensiblement orthogonalement au troisième tronçon 90.3. Une troisième paroi supérieure 90.5 s'étend sensiblement parallèlement au troisième tronçon 90.3 pour former un logement de réception du galet 83 sensiblement en forme de C.

De manière similaire, la quatrième butée inférieure 91.1 comprend un quatrième tronçon 91.3 rectiligne qui s'étend tangentiellement au chemin de roulement 86 pour relier un quatrième mur 91.4 qui s'étend sensiblement orthogonalement au quatrième tronçon 91.3. Une quatrième paroi inférieure 91.5 s'étend sensiblement parallèlement au quatrième tronçon 91.3 pour former un logement de réception du galet 84 sensiblement en forme de C.

En fonctionnement, lorsqu'un opérateur déplace le segment 40 relativement au segment 30 entre deux points du premier secteur angulaire Sa1, le centre 54 de la poulie 52 se déplace en suivant la trajectoire 57 grâce au chemins 60 et 61 avec lesquels collaborent les galets 55 et 56 lorsque l'angle θ est compris entre vingt et cent quatre-vingt degrés. Au cours de ce déplacement des galets 55 et 56, les galets 83 et 84 se déplacent le long des chemins 85 et 86 sur les tronçons 90.3 et 91.3 . Lorsque l'angle θ atteint cent quatre-vingt degrés, les galets 55 et 56 sont respectivement au contact des butées 70.1 et 71.1, et les galets 83 et 84 sont respectivement au contact des butées 90.1 et 91.1. Le câble 21 est alors tangent aux poulies 52 et 80 (figure 7).

Lorsqu'un opérateur déplace le segment 40 relativement au segment 30 de manière à ce que l'angle θ soit compris entre cent quatre-vingt degrés et trois-cent-quarante degrés, le centre 82 de la poulie 80 se déplace en suivant la trajectoire 87 grâce aux chemins 85 et 86 avec lesquels collaborent les galets 83 et 84. Au cours de ce déplacement des galets 83 et 84, les galets 55 et 56 se déplacent le long des chemins 60 et 61 sur les tronçons 70.3 et 71.3 .

Cet agencement garantit que la longueur L21 demeure constante et qu'ainsi une hauteur d'une charge 100 attelée au câble 21 ne varie pas pendant le déplacement relatif des segments 30 et 40 sur l'intégralité du secteur angulaire Sa1 lorsqu'une rotation du tambour 22 est bloquée. Le fait que la première droite D1 demeure sécante avec l'axe O1 élimine tout couple parasite pouvant s'opposer à la rotation du segment 30 relativement au segment 40 autour de l'axe O1.

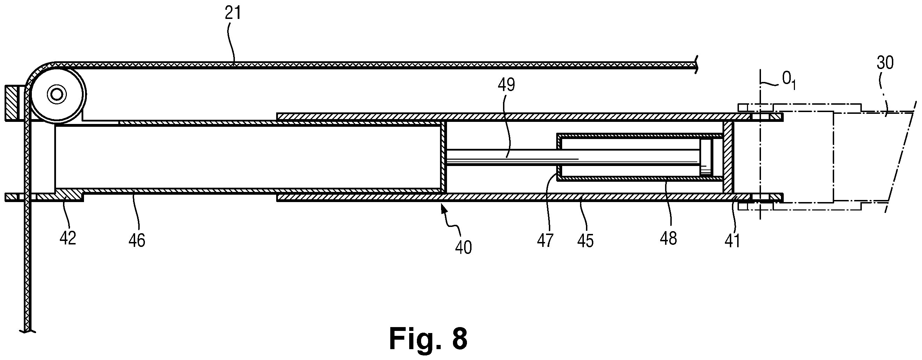

Selon un troisième mode de réalisation représenté en figure 8, le segment 40 est télescopique et comprend une première partie 45 qui reçoit une deuxième partie 46 à coulissement. La partie 45 porte la troisième extrémité 41 et la partie 46 porte la quatrième extrémité 42.

Le segment 40 comprend un vérin pneumatique 47 dont le corps 48 est relié à la partie 45 et la tige 49 est reliée à la partie 46. Il est alors possible de modifier la distance L2 en agissant sur le vérin 47.

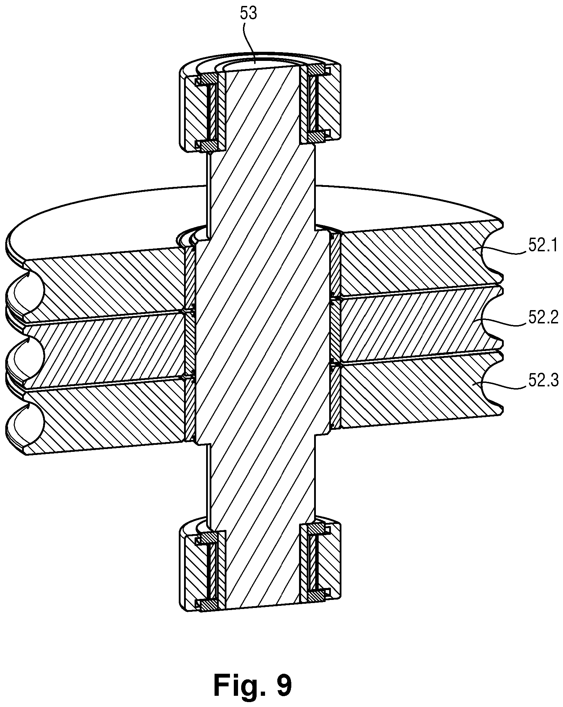

Selon un quatrième mode de réalisation représenté en figure 9, l'arbre 53 peut recevoir une pluralité de premières poulies. Comme visible en figure 9, l'arbre 53 comprend une première poulie supérieure 52.1, un première poulie médiane 52.2 et une troisième poulie inférieure 52.3. Conséquemment, l'extrémité 42 comprend alors plusieurs réas 43.

Bien entendu, l'invention n'est pas limitée au modes de réalisation décrits mais englobe toute variante entrant dans le champ de l'invention telle que définie par les revendications.

En particulier,

- bien qu'ici le bras soit articulé à la base, l'invention s'applique également à d'autres types de liaison du bras à la base comme par exemple une liaison encastrée. La base peut également consister en une paroi verticale ou orientée de manière quelconque à laquelle est relié le bras ;
- bien qu'ici l'appareil comprenne un câble relié à un motoréducteur d'actionnement d'un tambour, l'invention s'applique également à d'autres types d'organes de transmission d'un effort de levage et leurs actionneurs associés comme par exemple une roue dentée qui engrène avec une chaîne, une courroie crantée ou non ou un ruban et une roue, un organe hybride comprenant des bielles reliées par câble, ou un vérin quelconque appliquant un effort de traction à tout autre type d'organe de transmission;
- bien qu'ici le premier secteur angulaire soit égal à cent-soixante degrés, l'invention s'applique également à d'autres valeurs du premier secteur comprise entre zéro et trois-cent-soixante degrés ;
- bien qu'ici l'appareil comprenne un réa, l'invention s'applique également à d'autres types de deuxième élément de guidage de l'organe de transmission comme par exemple un œillet, ou un arbre fixe ;
- bien qu'ici le troisième élément de guidage comprenne une poulie, l'invention s'applique également à d'autres types de renvoi de l'organe de transmission comme par exemple un axe, une roue dentée, un réa, un œillet de guidage ou une goulotte ;
- bien qu'ici le câble coopère avec une première poulie de premier rayon, l'invention s'applique également à d'autres types de premier renvoi de câble dont le rayon d'enroulement est fonction de leur conception, ainsi, un renvoi cylindrique effectuant un renvoi du câble par roulement ou glissement possède un rayon d'enroulement du câble égal au rayon du cylindre, un renvoi de câble par œillet possède un rayon de roulement égal au rayon de l'œillet, un renvoi par goulotte articulée comprend un rayon d'enroulement correspondant à la distance séparant le point de contact du câble de l'articulation ;
- bien qu'ici le premier renvoi de câble soit monté à rotation sur un arbre pourvu de galets qui coopèrent avec un chemin, l'invention s'applique également à d'autres modalités de réalisation d'une liaison mobile du premier renvoi relativement au premier segment et au deuxième comme par exemple un arbre dont la surface serait traitée ou non pour limiter le frottement et qui collaborerait avec une lumière, ou encore un coulisseau monté sur un rail de guidage ;
- bien qu'ici le premier arbre soit pourvu de deux galets collaborant avec deux pistes de roulement, l'invention s'applique également à un unique galet collaborant avec une unique piste ou plus de deux galets collaborant avec plus de deux pistes ;
- bien qu'ici le troisième élément de guidage comprenne deux chemins de roulement, l'invention s'applique également à d'autres moyens de cheminement comme par exemple un unique chemin de roulement, une piste de glissement, une lumière dans un solide, un coulisseau sur un rail ou tout autre moyen de définir une trajectoire d'un élément ;
- bien qu'ici la première trajectoire dépende de la première distance et du rayon d'enroulement, l'invention s'applique également à une première trajectoire ne dépendant que du premier rayon ou de la première distance ou d'un autre paramètre ;
- bien qu'ici le système soit agencé de manière à ce que la première droite soit sécante avec le premier axe sur l'ensemble d'un premier secteur angulaire compris entre zéro et cent quatre-vingt degrés, l'invention s'applique également à d'autres agencements du système qui permettent de remplir cette condition pour une pluralité de positions couvrant une portion du premier secteur angulaire au moins égale à la moitié du premier secteur angulaire, comme par exemple un agencement du système qui respecte la condition d'intersection de la première droite et du premier axe que sur une portion égale à soixante-quinze pour cent du premier secteur angulaire ;
- bien qu'ici le câble coopère avec une deuxième poulie de deuxième rayon, l'invention s'applique également à d'autres types de deuxième renvoi de câble dont le rayon d'enroulement est fonction de leur conception, ainsi, un renvoi cylindrique effectuant un renvoi du câble par roulement ou glissement possède un rayon d'enroulement du câble égal au rayon du cylindre, un renvoi de câble par œillet possède un rayon de roulement égal au rayon de l'œillet, un renvoi par goulotte articulée comprend un rayon d'enroulement correspondant à la distance séparant le point de contact du câble de l'articulation ;

- bien qu'ici un bras relie le premier arbre support de la première poulie et le deuxième arbre support de la deuxième poulie, l'invention s'applique également à d'autres moyens de relier rigidement la première et la deuxième poulie l'une à l'autre comme par exemple une bielle, une structure en treillis ou des bras solidaires des extrémités des arbres ;
- bien qu'ici le deuxième segment comprenne un vérin pneumatique, l'invention s'applique également à d'autres types de deuxième actionneur comme par exemple un ensemble motoréducteur/poulie/câble, un vérin hydraulique, une crémaillère motorisée. L'invention s'applique également à une configuration du deuxième segment qui permet d'en modifier la longueur sans faire appel à un actionneur comme par exemple une action manuelle sur les deux parties du deuxième segment et l'activation d'un verrou manuel de type broche par exemple ;
- bien qu'ici le premier arbre comprenne trois premières poulies et le deuxième élément de guidage comprenne trois réas, l'invention s'applique également à d'autres agencements du deuxième et troisième points de guidage permettant de recevoir une pluralité de câbles, comme par exemple deux poulies par point de guidage, ou plus de trois.
- bien qu'ici les premiers moyens de cheminement soient solidaires du premier segment, l'invention s'applique également à une inversion cinématique du troisième élément de guidage selon laquelle les premiers moyens de cheminement seraient solidaires du deuxième segment de bras lorsque la première droite passe par le premier point de guidage et le troisième point de guidage.

**Revendications**

1. Appareil de levage (1) comprenant une base (2) à laquelle est relié un bras de levage (10) et un premier actionneur (20) relié à un organe de transmission (21) d'un effort de levage par un premier élément de guidage (22) qui collabore avec l'organe de transmission (21) en un premier point de guidage (23),

   le bras de levage (10) comprenant un premier segment (30) et un deuxième segment (40),
   le premier segment (30) comprenant une première extrémité (31) reliée à la base (2) et une deuxième extrémité (32) articulée sur une troisième extrémité (41) du deuxième segment (40) autour d'un premier axe (O1) à l'aide d'un premier pivot (11) de manière à autoriser une rotation du deuxième segment (40) relativement au premier segment (30) autour du premier axe (O1) sur un premier secteur angulaire (Sa1), une quatrième extrémité (42) du deuxième segment (40) comprenant un deuxième élément de guidage (43) de l'organe de transmission (21) qui collabore avec l'organe de transmission (21) en un deuxième point de guidage (44),
   **caractérisé en ce que** l'appareil (1) comprend un troisième élément de guidage (50) de l'organe de transmission (21) qui collabore avec l'organe de transmission (21) en un troisième point de guidage (51) de l'organe de transmission (21) et qui est agencé de manière à ce qu'une première droite (D1) passant par le deuxième point de guidage (44) et le troisième point de guidage (51) ou passant par le premier point de guidage (23) et le troisième point de guidage (51) soit sécante avec le premier axe (O1) pour une pluralité de positions relatives du premier segment (30) et du deuxième segment (40), la pluralité de positions couvrant une portion du premier secteur angulaire (Sa1) au moins égale à la moitié du premier secteur angulaire (Sa1), dans lequel le troisième élément de guidage (50) est agencé de manière à ce qu'une longueur de l'organe de transmission (21) comprise entre le premier point de guidage (23) et le deuxième point de guidage (44) soit constante pour la pluralité de positions relatives du premier segment (30) et du deuxième segment (40).

2. Appareil de levage (1) selon la revendication 1, dans lequel le premier secteur angulaire (Sa1) est sensiblement égal à cent quatre-vingt degrés et/ou la première portion est sensiblement égale à cent pour cent du premier secteur angulaire (Sa1).

3. Appareil de levage (1) selon l'une quelconque des revendications précédentes, dans lequel le troisième élément de guidage (50) comprend un premier renvoi (52) de l'organe de transmission (21) monté de manière mobile relativement au premier segment (30) et au deuxième segment (40), l'appareil de levage (1) comprenant des premiers moyens de cheminement (60, 61) qui définissent une première trajectoire (57) d'un premier centre (54) du premier renvoi (52) de l'organe de transmission (21).

4. Appareil de levage (1) selon la revendication 3, dans lequel au moins un premier galet (55, 56) est relié au premier renvoi (52) de l'organe de transmission (21) et les premiers moyens de cheminement (60, 61) comprennent au moins un premier chemin de roulement (60, 61) du premier galet (55, 56).

5. Appareil de levage (1) selon la revendication 3 ou 4, dans lequel la première trajectoire (57) est une trajectoire de type développante.

6. Appareil de levage (1) selon l'une quelconque des revendications 3 à 5, dans lequel la première trajectoire (57) dépend de la distance qui sépare le premier point de guidage (23) et le premier axe (O1).

7. Appareil de levage (1) selon l'une quelconque des revendications 3 à 6, dans lequel la première trajectoire (57) dépend également d'un premier rayon (r1) d'enroulement de l'organe de transmission (21) autour du premier renvoi (52).

8. Appareil de levage (1) selon les revendications 6 et 7, dans lequel, la première trajectoire (57) regroupe l'ensemble des points M dont les coordonnées dans un repère orthonormé centré sur le premier axe (O1) et dans lequel un axe des abscisses est confondu avec une deuxième droite (D0) reliant le premier point de guidage (23) et le premier axe (O1) résolvent le système d'équations suivant :

$$\begin{cases} L_1.(1 - \cos\delta) + r_1.(\beta_2.\cos\delta - \sin\delta) - r_1.(\beta_1.\cos\theta + \sin\theta) = 0 \\ -L_1.\sin\delta + r_1.(\beta_2.\sin\delta + \cos\delta) - r_1.(\beta_1.\sin\theta - \cos\theta) = 0 \\ \beta_1 + \beta_2 + \theta - \delta - \pi = 0 \end{cases}$$

Avec

X, une abscisse du point M tel que X= r1*($\beta$1*cos$\theta$ + sin$\theta$) ;
Y, une ordonnée du point M tel que Y= r1*($\beta$1*sin$\theta$ - cos$\theta$) ;
$\theta$ un angle formé par le premier segment et le deuxième segment ;
r1 : le premier rayon d'enroulement de l'organe de transmission (21) autour du premier renvoi (52).

9. Appareil de levage (1) selon l'une quelconque des revendications 3 à 8, dans lequel la première droite (D1) passe par le deuxième point de guidage (44) et le troisième point de guidage (51) et les premiers moyens de cheminement (60, 61) sont solidaires du premier segment (30).

10. Appareil de levage (1) selon l'une quelconque des revendications 3 à 8, dans lequel la première droite (D1) passe par le premier point de guidage (23) et le troisième point de guidage (51) et les premiers moyens de cheminement (60, 61) sont solidaires du deuxième segment (30).

11. Appareil de levage (1) selon l'une quelconque des revendications 3 à 10, dans lequel les premiers moyens de cheminement (60, 61) comprennent une première butée (70.1, 70.2) de fin de course et une deuxième butée (71.1, 71.2) de fin de course.

12. Appareil de levage (1) selon l'une quelconque des revendications 3 à 11, dans lequel les premiers moyens de cheminement (60, 61) comprennent un deuxième galet (56) relié au premier renvoi (52) de l'organe de transmission (21) et les premiers moyens de cheminement (60, 61) comprennent un deuxième chemin de roulement (61) du deuxième galet (56).

13. Appareil de levage (1) selon l'une quelconque des revendications 3 à 12, dans lequel le troisième élément de guidage (50) comprend un deuxième renvoi (80) de l'organe de transmission monté de manière mobile relativement au premier segment (30) et au deuxième segment (40), l'appareil de levage (1) comprenant des deuxièmes moyens de cheminement (85, 86) qui définissent une deuxième trajectoire (87) d'un deuxième centre (82) du deuxième renvoi (80) de l'organe de transmission (21).

14. Appareil de levage (1) selon la revendication 13, dans lequel au moins un troisième galet (83, 84) est relié au deuxième renvoi (80) de l'organe de transmission (21) et les deuxièmes moyens de cheminement comprennent au moins un troisième chemin de roulement (85) du troisième galet (83).

15. Appareil de levage (1) selon la revendication 14, dans lequel le premier renvoi (52) de l'organe de transmission (21) et le deuxième renvoi (80) de l'organe de transmission (21) sont reliés de manière rigide l'un à l'autre.

16. Appareil de levage (1) selon l'une quelconque des revendications 13 à 15, dans lequel les deuxièmes moyens de cheminement (85, 86) comprennent une troisième butée (90.1, 90.2) de fin de course et une quatrième butée (91.1, 91.2) de fin de course.

**17.** Appareil de levage (1) selon l'une quelconque des revendications précédentes, dans lequel le deuxième segment (40) est configuré de manière à ce qu'une distance (L2) séparant le deuxième point de guidage (44) et le premier axe (O1) soit modifiable.

**18.** Appareil de levage (1) selon la revendication 17, comprenant un deuxième actionneur (47) pour modifier la distance (L2) séparant le deuxième point de guidage (44) et le premier axe (O1).

**19.** Appareil de levage (1) selon l'une quelconque des revendications précédentes, dans lequel le deuxième élément de guidage (43) et le troisième élément de guidage (50) sont agencés pour collaborer avec une pluralité d'organes de transmission (21).

**20.** Appareil de levage (1) selon l'une quelconque des revendications précédentes, dans lequel l'organe de transmission (21) est un câble.


**Patentansprüche**

**1.** Hebegerät (1) mit einer Basis (2), mit welcher ein Hebearm (10) verbunden ist, und mit einem ersten Stellglied (20), das mit einem Übertragungsorgan (21) zur Übertragung einer Hebekraft verbunden ist, und zwar über ein erstes Führungselement (22), das an einem ersten Führungspunkt (23) mit dem Übertragungsorgan (21) zusammenwirkt,

wobei der Hebearm (10) ein erstes Segment (30) und ein zweites Segment (40) umfasst,
wobei das erste Segment (30) umfasst: ein erstes Ende (31), welches mit der Basis (2) verbunden ist, und ein zweites Ende (32), das mithilfe eines ersten Drehzapfens (11) um eine erste Achse (O1) herum derart an einem dritten Ende (41) des zweiten Segments (40) angelenkt ist, dass eine Drehung des zweiten Segments (40) relativ zu dem ersten Segment (30) über einen ersten Winkelsektor (Sa1) um die erste Achse (O1) herum ermöglicht wird, wobei ein viertes Ende (42) des zweiten Segments (40) ein zweites Führungselement (43) für das Übertragungsorgan (21) umfasst, das an einem zweiten Führungspunkt (44) mit dem Übertragungsorgan (21) zusammenwirkt,

**dadurch gekennzeichnet, dass** das Gerät (1) ein drittes Führungselement (50) für das Übertragungsorgan (21) umfasst, welches an einem dritten Führungspunkt (51) des Übertragungsorgans (21) mit dem Übertragungsorgan (21) zusammenwirkt und welches derart angeordnet ist, dass eine durch den zweiten Führungspunkt (44) und den dritten Führungspunkt (51) oder durch den ersten Führungspunkt (23) und den dritten Führungspunkt (51) hindurch verlaufende, erste Gerade (D1) die erste Achse (O1) für eine Mehrzahl von relativen Positionen des ersten Segments (30) und des zweiten Segments (40) schneidet, wobei die Mehrzahl von Positionen einen Abschnitt des ersten Winkelsektors (Sa1) abdeckt, der zumindest der Hälfte des ersten Winkelsektors (Sa1) entspricht, wobei das dritte Führungselement (50) derart angeordnet ist, dass eine Länge des Übertragungsorgans (21) zwischen dem ersten Führungspunkt (23) und dem zweiten Führungspunkt (44) für die Mehrzahl von relativen Positionen des ersten Segments (30) und des zweiten Segments (40) konstant ist.

**2.** Hebegerät (1) nach Anspruch 1, wobei der erste Winkelsektor (Sa1) im Wesentlichen gleich hundertachtzig Grad ist und/oder der erste Abschnitt im Wesentlichen gleich hundert Prozent des ersten Winkelsektors (Sa1) ist.

**3.** Hebegerät (1) nach einem der vorhergehenden Ansprüche, wobei das dritte Führungselement (50) eine relativ zu dem ersten Segment (30) und zu dem zweiten Segment (40) beweglich angebrachte, erste Umlenkung (52) des Übertragungsorgans (21) umfasst, wobei das Hebegerät (1) erste Laufmittel (60, 61) umfasst, die eine erste Laufbahn (57) eines ersten Mittelpunkts (54) der ersten Umlenkung (52) des Übertragungsorgans (21) definieren.

**4.** Hebegerät (1) nach Anspruch 3, wobei zumindest eine erste Rolle (55, 56) mit der ersten Umlenkung (52) des Übertragungsorgans (21) verbunden ist und die ersten Laufmittel (60, 61) zumindest eine erste Rollfläche (60, 61) der ersten Rolle (55, 56) umfassen.

**5.** Hebegerät (1) nach Anspruch 3 oder 4, wobei es sich bei der ersten Laufbahn (57) um eine Evolventenlaufbahn handelt.

**6.** Hebegerät (1) nach einem der Ansprüche 3 bis 5, wobei die erste Laufbahn (57) von dem Abstand zwischen dem ersten Führungspunkt (23) und der ersten Achse (O1) abhängig ist.

7.  Hebegerät (1) nach einem der Ansprüche 3 bis 6, wobei die erste Laufbahn (57) ferner von einem Wickelradius (r1) des Übertragungsorgans (21) um die erste Umlenkung (52) herum abhängig ist.

8.  Hebegerät (1) nach den Ansprüchen 6 und 7, wobei die erste Laufbahn (57) sämtliche Punkte M umfasst, deren Koordinaten in einem orthonormierten Koordinatensystem, das auf die erste Achse (O1) zentriert ist und in welchem eine Abszissenachse mit einer den ersten Führungspunkt (23) und die erste Achse (O1) verbindenden, zweiten Geraden (D0) zusammenfällt, das folgende Gleichungssystem erfüllen:

$$\begin{cases} L_1.(1 - \cos\delta) + r_1.(\beta_2.\cos\delta - \sin\delta) - r_1.(\beta_1.\cos\theta + \sin\theta) = 0 \\ -L_1.\sin\delta + r_1.(\beta_2.\sin\delta + \cos\delta) - r_1.(\beta_1.\sin\theta - \cos\theta) = 0 \\ \beta_1 + \beta_2 + \theta - \delta - \pi = 0 \end{cases}$$

obei

X eine Abszisse des Punktes M ist, so dass X= r1*($\beta$1*cos $\theta$ + sin $\theta$);
Y eine Ordinate des Punktes M ist, so dass Y= r1*($\beta$1*sin $\theta$ - cos $\theta$);
$\theta$ ein Winkel zwischen dem ersten Segment und dem zweiten Segment ist;
r1 der erste Wickelradius des Übertragungsorgans (21) um die erste Umlenkung (52) herum ist.

9.  Hebegerät (1) nach einem der Ansprüche 3 bis 8, wobei die erste Gerade (D1) durch den zweiten Führungspunkt (44) und durch den dritten Führungspunkt (51) verläuft und die ersten Laufmittel (60, 61) fest mit dem ersten Segment (30) verbunden sind.

10. Hebegerät (1) nach einem der Ansprüche 3 bis 8, wobei die erste Gerade (D1) durch den ersten Führungspunkt (23) und durch den dritten Führungspunkt (51) hindurch verläuft und die ersten Laufmittel (60, 61) fest mit dem zweiten Segment (30) verbunden sind.

11. Hebegerät (1) nach einem der Ansprüche 3 bis 10, wobei die ersten Laufmittel (60, 61) einen ersten Endanschlag (70.1, 70.2) und einen zweiten Endanschlag (71.1, 71.2) umfassen.

12. Hebegerät (1) nach einem der Ansprüche 3 bis 11, wobei die ersten Laufmittel (60, 61) eine zweite Rolle (56) umfassen, die mit der ersten Umlenkung (52) des Übertragungsorgans (21) verbunden ist und die ersten Laufmittel (60, 61) eine zweite Rollfläche (61) der zweiten Rolle (56) umfassen.

13. Hebegerät (1) nach einem der Ansprüche 3 bis 12, wobei das dritte Führungselement (50) eine relativ zu dem ersten Segment (30) und zu dem zweiten Segment (40) beweglich angebrachte, zweite Umlenkung (80) des Übertragungsorgans (21) umfasst, wobei das Hebegerät (1) zweite Laufmittel (85, 86) umfasst, die eine zweite Laufbahn (87) eines zweiten Mittelpunkts (82) der zweiten Umlenkung (80) des Übertragungsorgans (21) definieren.

14. Hebegerät (1) nach Anspruch 13, wobei zumindest eine dritte Rolle (83, 84) mit der zweiten Umlenkung (80) des Übertragungsorgans (21) verbunden ist und die zweiten Laufmittel zumindest eine dritte Rollfläche (85) der dritten Rolle (83) umfassen.

15. Hebegerät (1) nach Anspruch 14, wobei die erste Umlenkung (52) des Übertragungsorgans (21) und die zweiten Umlenkung (80) des Übertragungsorgans (21) starr miteinander verbunden sind.

16. Hebegerät (1) nach einem der Ansprüche 13 bis 15, wobei die zweiten Laufmittel (85, 86) einen dritten Endanschlag (90.1, 90.2) und einen vierten Endanschlag (91.1, 91.2) umfassen.

17. Hebegerät (1) nach einem der vorhergehenden Ansprüche, wobei das zweite Segment (40) derart ausgelegt ist, dass ein Abstand (L2) zwischen dem zweiten Führungspunkt (44) und der ersten Achse (O1) veränderbar ist.

18. Hebegerät (1) nach Anspruch 17, umfassend ein zweites Stellglied (47) zur Veränderung des Abstands (L2) zwischen dem zweiten Führungspunkt (44) und der ersten Achse (O1).

19. Hebegerät (1) nach einem der vorhergehenden Ansprüche, wobei das zweite Führungselement (43) und das dritte Führungselement (50) derart angeordnet sind, dass sie mit einer Mehrzahl von Übertragungsorganen (21) zusammenwirken.

20. Hebegerät (1) nach einem der vorhergehenden Ansprüche, wobei es sich bei dem Übertragungsorgan (21) um ein Seil handelt.

## Claims

1. A lifting apparatus (1) comprising a base (2) to which a lifting arm (10) is connected and a first actuator (20) connected to a member (21) for transmitting a lifting force by a first guide element (22) which cooperates with the transmission member (21) at a first guide point (23),

   the lifting arm (10) comprising a first segment (30) and a second segment (40),
   the first segment (30) comprising a first end (31) connected to the base (2) and a second end (32) articulated to a third end (41) of the second segment (40) about a first axis (O1) by means of a first pivot (11) so as to allow rotation of the second segment (40) relative to the first segment (30) about the first axis (O1) on a first angular sector (Sa1), a fourth end (42) of the second segment (40) comprising a second guide element (43) for the transmission member (21) which cooperates with the transmission member (21) at a second guide point (44),
   **characterised in that** the apparatus (1) comprises a third guide element (50) of the transmission member (21) which cooperates with the transmission member (21) at a third guide point (51) of the transmission member (21) and which is arranged so that a first straight line (D1) passing through the second guide point (44) and the third guide point (51) or passing through the first guide point (23) and the third guide point (51) is secant with the first axis (O1) for a plurality of relative positions of the first segment (30) and the second segment (40), the plurality of positions spanning a portion of the first angular sector (Sal) at least equal to half of the first angular sector (Sal), wherein the third guide element (50) is arranged so that a length of the transmission member (21) between the first guide point (23) and the second guide point (44) is constant for the plurality of relative positions of the first segment (30) and the second segment (40).

2. The lifting apparatus (1) according to claim 1, wherein the first angular sector (Sa1) is substantially equal to one hundred and eighty degrees and/or the first portion is substantially equal to one hundred percent of the first angular sector (Sa1).

3. The lifting apparatus (1) according to any one of the preceding claims, wherein the third guide member (50) comprises a first idler (52) of the transmission member (21) movably mounted relative to the first segment (30) and the second segment (40), the lifting apparatus (1) comprising first routing means (60, 61) which define a first path (57) of a first centre (54) of the first idler (52) of the transmission member (21).

4. The lifting apparatus (1) according to claim 3, wherein at least one first roller (55, 56) is connected to the first idler (52) of the transmission member (21) and the first routing means (60, 61) comprise at least one first raceway (60, 61) of the first roller (55, 56).

5. The lifting apparatus (1) according to claim 3 or 4, wherein the first path (57) is an involute-type path.

6. The lifting apparatus (1) according to any one of claims 3 to 5, wherein the first path (57) depends on the distance between the first guide point (23) and the first axis (O1).

7. The lifting apparatus (1) according to any one of claims 3 to 6, wherein the first path (57) also depends on a first winding radius (r1) of the transmission member (21) around the first idler (52).

8. The lifting apparatus (1) according to Claims 6 and 7, in which, the first path (57) groups together all the points M whose coordinates in an orthonormal coordinate system centred on the first axis (O1) and in which an abscissa axis is merged with a second straight line (DO) connecting the first guide point (23) and the first axis (O1) solve the following system of equations:

$$\begin{cases} L_1.(1 - \cos\delta) + r_1.(\beta_2.\cos\delta - \sin\delta) - r_1.(\beta_1.\cos\theta + \sin\theta) = 0 \\ -L_1.\sin\delta + r_1.(\beta_2.\sin\delta + \cos\delta) - r_1.(\beta_1.\sin\theta - \cos\theta) = 0 \\ \beta_1 + \beta_2 + \theta - \delta - \pi = 0 \end{cases}$$

wherein

X, an abscissa of point M such that $X = r1 \cdot (\beta1 \cdot \cos\theta + \sin\theta)$ ;
Y, an ordinate of point M such that $Y = r1 \cdot (\beta1 \cdot \sin\theta \cos\theta)$ ;
$\theta$ an angle formed by the first segment and the second segment;
r1: the first winding radius of the transmission member (21) around the first idler (52).

9. The lifting apparatus (1) according to any one of claims 3 to 8, wherein the first straight line (D1) passes through the second guide point (44) and the third guide point (51) and the first routing means (60, 61) are secured to the first segment (30).

10. The lifting apparatus (1) according to any one of claims 3 to 8, wherein the first straight line (D1) passes through the first guide point (23) and the third guide point (51) and the first routing means (60, 61) are secured to the second segment (30).

11. The lifting apparatus (1) according to any one of claims 3 to 10, wherein the first routing means (60, 61) comprise a first limit stop (70.1, 70.2) and a second limit stop (71.1, 71.2).

12. The lifting apparatus (1) according to any one of claims 3 to 11, wherein the first routing means (60, 61) comprise a second roller (56) connected to the first idler (52) of the transmission member (21), and the first routing means (60, 61) comprise a second raceway (61) for the second roller (56).

13. The lifting apparatus (1) according to any one of claims 3 to 12, wherein the third guide element (50) comprises a second idler (80) of the transmission member movably mounted relative to the first segment (30) and the second segment (40), the lifting apparatus (1) comprising second routing means (85, 86) which define a second path (87) of a second centre (82) of the second idler (80) of the transmission member (21).

14. The lifting apparatus (1) according to claim 13, wherein at least one third roller (83, 84) is connected to the second idler (80) of the transmission member (21) and the second routing means comprise at least one third raceway (85) for the third roller (83).

15. The lifting apparatus (1) according to claim 14, wherein the first idler (52) of the transmission member (21) and the second idler (80) of the transmission member (21) are rigidly connected to each other.

16. The lifting apparatus (1) according to any one of claims 13 to 15, wherein the second routing means (85, 86) comprise a third limit stop (90.1, 90.2) and a fourth limit stop (91.1, 91.2).

17. The lifting apparatus (1) according to any one of the preceding claims, wherein the second segment (40) is configured such that a distance (L2) between the second guide point (44) and the first axis (O1) is changeable.

18. The lifting apparatus (1) according to claim 17, comprising a second actuator (47) for modifying the distance (L2) separating the second guide point (44) and the first axis (O1).

19. The lifting apparatus (1) according to any one of the preceding claims, wherein the second guide member (43) and the third guide member (50) are arranged to cooperate with a plurality of transmission members (21).

20. The lifting apparatus (1) according to any one of the preceding claims, wherein the transmission member (21) is a cable.

**Fig. 1**

Fig. 2

**Fig. 3**

Fig. 4

Fig. 5

Fig. 6

**Fig. 7**

Fig. 8

**Fig. 9**

## RÉFÉRENCES CITÉES DANS LA DESCRIPTION

**Documents brevets cités dans la description**

- CN 109264597 A